# EUROPÄISCHE PATENTANMELDUNG

(11) **EP 1 185 128 A2**
(43) Veröffentlichungstag der Anmeldung: **06.03.2002**
(21) Anmeldenummer: 01118189.8
(22) Anmeldetag: 27.07.2001
(51) Int. Cl.: H04Q 11/04

(54) **Schnittstelle für eine Telefonverbindung mit einer steuerbaren Spannungsversorgung**

(30) Priorität: 29.08.2000 DE 10042336
(71) Anmelder: Tenovis GmbH & Co. KG, 60326 Frankfurt am Main (DE)
(72) Erfinder: Friedrich, Klaus-Georg, 61130 Nidderau (DE)
(74) Vertreter: Patentanwaltskanzlei WILHELM & BECK

(57) **Zusammenfassung**

Es wird eine Schnittstelle beschrieben, die wahlweise als Teilnehmeranschluß (S₀) oder als Amtsanschluß (T₀) betrieben werden kann. Dazu ist eine Spannungsversorgung vorgesehen, die wahlweise mit den Leitungen verbunden werden kann, an denen die Endgeräte angeschlossen sind. Auf diese Weise ist eine einfache Konfiguration als Teilnehmeranschluß oder Amtsanschluß möglich.

## Beschreibung

Die Erfindung betrifft eine Schnittstelle für eine Telefonverbindung gemäß dem Oberbegriff des Patentanspruchs 1.

Es ist eine ISDN-Basisschnittstelle bekannt, bei der eine Datenleitung über eine Netzabschlußeinheit (NT) als Schnittstelle vorgesehen ist, über die eine Umwandlung von ISDN-Daten erfolgt. Die Netzabschlußeinheit setzt die ISDN-Daten, die über eine Zweidrahtleitung von einer Vermittlungseinrichtung zugeführt werden, auf vier Leitungen einer S₀-Schnittstelle um. Zwischen der Vermittlungseinrichtung und der Netzabschlußeinheit werden die Daten gleichzeitig in beiden Richtungen über eine Kupferdoppelader übertragen. Nach der Netzabschlußeinheit erfolgt die Übertragung nach Richtungen getrennt, d.h. je Übertragungsrichtung wird eine Kupferdoppelader als Endgeräteleitung verwendet. Üblicherweise ist eine S₀-Schnittstelle in Form eines Busses ausgeführt, an den mehrere Endgeräte angeschaltet werden können. Zur Versorgung der Endgeräte werden die Endgeräteleitungen zusätzlich mit einer Gleichspannung versorgt, über die die angeschlossenen Endgeräte mit Spannung versorgt werden.

Die Aufgabe der Erfindung besteht darin, eine flexiblere Schnittstelle bereitzustellen, über die ein Telefonanschluß mit oder ohne Stromversorgung bereitgestellt wird.

Die Aufgabe der Erfindung wird durch die Merkmale des Anspruchs 1 gelöst.

Vorzugsweise ist eine Stromversorgung an ein Übertragermodul angeschlossen, wobei die Stromversorgung ein- bzw. ausschaltbar ist. Bei eingeschalteter Stromversorgung werden die Endgeräteleitungen mit einer Gleichspannung versorgt, so daß die Endgeräte mit Strom versorgt werden. Soll die Schnittstelle als Amtsanschluß verwendet werden, so wird die Stromversorgung abgeschaltet und somit liegt kein störender Gleichspannungsanteil auf den Endgeräteleitungen.

Weitere vorteilhafte Ausführungsformen der Erfindung sind in den abhängigen Ansprüchen angegeben.

In einer bevorzugten Ausführungsform weist das Übertragermodul für jede der zwei Übertragungsrichtungen jeweils eine Übertragereinheit auf. Jede Übertragereinheit wiederum verfügt über zwei Übertragerelemente, wobei ein Übertragerelement mit den Endgeräteleitungen der Schnittstelle und das andere Übertragerelement mit Leitungen der Schnittstelle verbunden ist. Die Übertragerelemente, die mit den Endgeräteleitungen verbunden sind, stehen mit einem Schalter und mit einer Spannungsversorgung in Verbindung. Durch die beschriebene Anordnung wird in einfacher Weise die Spannungsversorgung in die Endgeräteleitungen eingespeist.

In einer bevorzugten Ausführungsform ist vor dem Schalter und/oder vor der Spannungsversorgung eine Schutzdiode angeordnet, die den Schalter und die Spannungsversorgung gegen eine falsche Polung schützen. Auf diese Weise wird eine Beschädigung sowohl des Schalters als auch der Spannungsversorgung vermieden.

In einer weiteren Ausführungsform ist eine erste Diode an die Leitung zwischen dem Schalter und dem ersten Übertragungselement angeschlossen, die ab einem vorgegebenen Spannungswert eine Verbindung zu einem Masseanschluss herstellt. Somit wird der Schalter gegen eine Überspannung wie z.B. einem Blitzschlag geschützt.

In einer weiteren bevorzugten Ausführungsform ist die Leitung zwischen der Spannungsversorgung und dem zweiten Übertragungselement mit einer zweiten Diode verbunden, die ab einem vorgegebenen Spannungswert eine Verbindung zu einem Masseanschluß herstellt. Diese Ausführungsform bietet einen Überspannungsschutz für die Spannungsversorgung, wie er beispielsweise bei einem Blitzschlag vorteilhaft ist.

In einer weiteren bevorzugten Ausführungsform ist die Leitung zwischen der Spannungsversorgung und dem zweiten Übertragungslement an eine dritte Diode angeschlossen, die ab einem vorgegebenen, positiven Spannungswert eine Verbindung zu einem Masseanschluß herstellt. Auf diese Weise wird die Spannungsversorgung gegen eine Fehlpolung geschützt. Vorzugsweise öffnet die dritte Diode eine Verbindung zum Masseanschluß, wenn die anliegende Spannung über einem Wert von +0,8 V liegt.

In einer weiteren Ausführungsform weist die Schnittstelle Mittel auf, mit denen aus einem ankommenden Signal, insbesondere einem ISDN-Signal ein Takt ermittelbar ist, der zur Synchronisierung von Endgeräten zur Verfügung steht.

Die Erfindung wird im Folgenden anhand der Figuren näher erläutert. Es zeigen:
- Fig. 1: eine Anordnung mit einer Vermittlungsanlage und einer Schnittstelle, über die Daten an Endgeräte weitergeleitet werden und
- Fig. 2: eine Detailansicht der Schnittstelle mit einem Übertragermodul mit Spannungsversorgung.

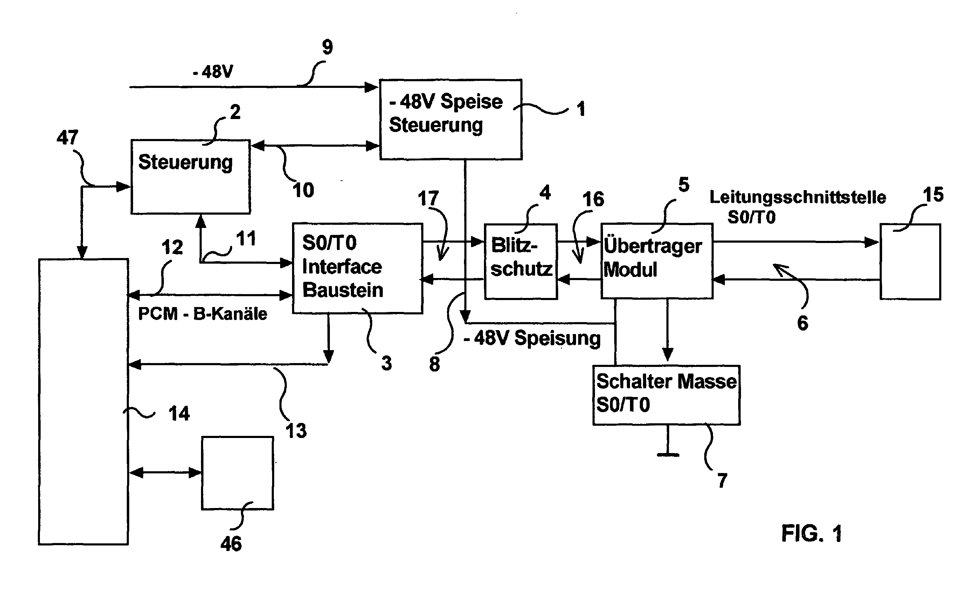

Fig. 1 zeigt eine zentrale Telefonanlage 14, vorzugsweise in Form einer Vermittlungsanlage, die über Datenkanäle 12 mit einer Schnittstelle 3 verbunden ist. Die zentrale Telefonanlage 14 führt Steuerfunktionen durch, die zum Aufbau einer Telefonverbindung benötigt werden. Beispielsweise steht die Telefonanlage 14 mit einer weiteren Schnittstelle 46 in Verbindung und baut nach Erhalt eines Anfragesignals eine Verbindung zwischen der Schnittstelle 3 und der weiteren Schnittstelle 46 auf. Die Datenkanäle 12 sind beispielsweise in Form von Pulscode-modulierten B-Kanälen einer ISDN-Datenleitung ausgebildet. Die Schnittstelle 3 steht über eine Steuerdatenleitung 11 mit einer Steuerung 2 in Verbindung. Die Steuerung 2 ist über eine weitere Steuerleitung 47 an die Telefonanlage 14 angeschlossen und erhält von der Telefonanlage Steuerbefehle. Über die Steuerdatenleitung 11 werden Steuersignale wie beispielsweise die Daten des D-Kanals einer ISDN-Verbindung an die Steuerung 2 weitergegeben. Die Steuerung 2 steuert aufgrund der Daten des D-Kanals eine Umwandlung der Nutzdaten der Datenkanäle 12 in ein Format, mit dem die Nutzdaten über Schnittstellenleitungen 17 an Endgeräte 15 weitergegeben werden. Zur Weiterverarbeitung werden die Nutzdaten über die Schnittstellenleitungen 17 über jeweils ein Leiterpaar getrennt nach Übertragungsrichtungen ausgetauscht. Die Datenprotokolle werden in der Schnittstelle 3 in entsprechende Datenformate umgewandelt, die von den Endgeräten (15) verarbeitet werden können. Die Umsetzung der Datenprotokolle ist nach Normen festgelegt und wird deshalb nicht näher erläutert.

Als Endgerät 15 kann ein S₀-Endgerät oder ein T₀-Amtsanschluss vorgesehen sein. Die Schnittstelle 3 ist je nach Art des Endgerätes entsprechend zu konfigurieren. Die Schnittstellenleitungen 17 verbinden die Schnittstelle 3 mit einer Blitzschutzschaltung 4, die wiederum mit einem Übertragermodul 5 in Verbindung steht. Das Übertragermodul 5 ist mit einer ersten Leitungsseite 16 mit der Blitzschutzschaltung 4 verbunden. Das Übertragermodul 5 weist eine zweite Leitungsseite 6 auf, die vier Endleitungen aufweist, an denen Endgeräte 15 angeschlossen sind. Das Übertragermodul 5 steht über zwei Leitungen mit einer Schaltereinheit 7 in Verbindung, die wiederum an einen Masseanschluß angeschlossen ist.

Die Steuerung 2 steht über eine Steuerleitung 10 mit einer Spannungssteuerung 1 in Verbindung. An die Spannungssteuerung 1 ist eine Spannungsleitung 9 geführt, die beispielsweise ein Spannungspotential von -48 V aufweist. Die Spannungssteuerung 1 steht über eine Speiseleitung 8 mit einer Leitung in Verbindung, die das Übertragermodul 5 mit der Schaltereinheit 7 verbindet. Die Schnittstelle 3 kann über eine Software- und/oder eine Hardwarekonfiguration als S₀- oder als T₀-Schnittstelle konfiguriert werden.

Die Anordnung nach Fig. 1 funktioniert wie folgt: Die Vermittlungsanlage 14 sendet über die Datenkanäle 12 Daten in Form eines ISDN-Datenformates an die Schnittstelle 3. Die Daten sind in Form von Pulscode-modulierten Signalen verpackt und werden über zwei Nutzdatenkanäle (B-Kanäle) übertragen. Parallel werden Steuerdaten über einen Steuerdatenkanal (D-Kanal) übertragen. Die Schnittstelle 3 gibt die Steuerdaten an die Steuerung 2. Die Schnittstelle 3 wandelt die empfangenen Daten in ein Datenprotokoll um, mit dem die Daten über zwei gerichtete Endleitungen zu Endgeräten 15 übertragen werden können.

Gleichzeitig erfasst die Schnittstelle 3 einen Synchronisationstakt, nach dem die Nutzdaten zur Schnittstelle 3 übertragen werden. Der Takt wird über eine Taktleitung 13 zur weiteren Verarbeitung der zentralen Telefonanlage 14 zugeführt. Der Takt wird bei Anschluss eines T₀-Amtsanschlusses für die Synchronisation des Endgerätes verwendet.

Wurde die Schnittstelle 3 als S₀-Schnittstelle konfiguriert, so wird von der Steuerung 2 über die Steuerleitung 10 die Spannungssteuerung 1 eingeschaltet, so daß die Spannung, die auf der Spannungsleitung 9 herrscht, über die Spannungssteuerung 1 an das Übertragermodul 5 und die Schaltereinheit 7 geführt wird.

Die zugeführte Spannung wird über das Übertragermodul 5 und die Endleitungen an die Endgeräte 15 weitergeführt, so daß die Endgeräte 15, die als S₀-Endgeräte ausgebildet sind, mit der benötigten Spannung versorgt werden. Gleichzeitig ist die Schaltereinheit 7 durch die zugeführte Spannung in der Weise geschaltet, daß ein Strom über das Übertragermodul 5 zu den Endgeräten 15 und wieder zurück zum Übertragermodul 5 und zur Schaltereinheit 7 fließen kann.

Ist die Schnittstelle 3 als T₀-Schnittstelle konfiguriert, so schaltet die Steuerung 2 die Spannungssteuerung 1 aus, so daß die Endleitungen nicht mit einer entsprechenden Spannung versorgt werden. In diesem Zustand können Endgeräte in Form eines Amtsanschlusses (T₀) an die Ausgangsleitungen des Übertragermoduls 5 angeschlossen werden. Da der T₀-Amtsanschluss eine eigene Stromversorgung aufweist, ist eine zusätzliche Spannungsversorgung nicht notwendig.

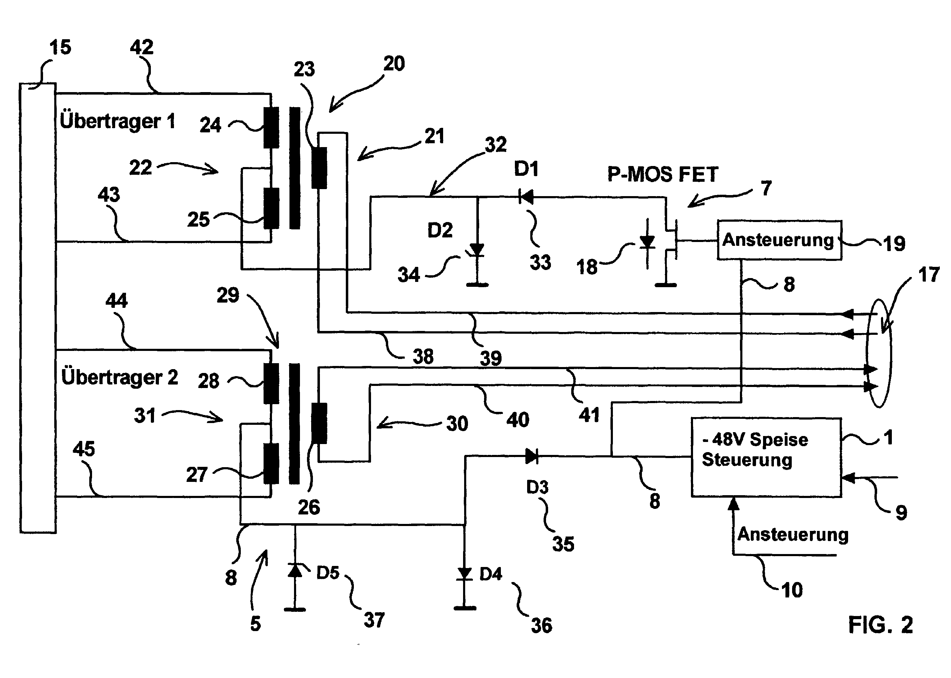

Fig. 2 zeigt eine detaillierte Darstellung des Übertragermoduls 5. Das Übertragermodul 5 weist eine erste Übertragereinheit 20 und eine zweite Übertragereinheit 29 auf. Die erste Übertragereinheit 20 weist ein erstes Übertragerelement 21 in Form einer ersten Ringkernspulenwicklung 23 auf. Die erste Ringkernspulenwicklung 23 steht mit einem Ende mit einer ersten und mit dem anderen Ende mit einer zweiten Schnittstellenleitung 38, 39 in Verbindung, die zur Schnittstelle 3 geführt sind. Dem ersten Übertragerelement 21 ist ein zweites Übertragerelement 22 zugeordnet, das eine zweite und eine dritte Ringkernspulenwicklung 24, 25 aufweist, die über eine Verbindungsleitung in Serie geschaltet sind. Die zweite Ringkernspulenwicklung 24 steht mit einer ersten Endstellenleitung 42 und die dritte Ringkernspulenwicklung 25 mit einer zweiten Endstellenleitung 43 in Verbindung. Die erste und zweite Endstellenleitung 42, 43 stellen einen Teil der Endleitungen dar, die zu den Endgeräten 15 geführt sind. Über das erste und zweite Übertragerelement 21, 22 werden Signale ohne Leitungsverbindung zwischen der Schnittstelle 3 und den Endgeräten 15 ausgetauscht.

An die Verbindungsleitung zwischen der zweiten und dritten Ringkernspulenwicklung 24, 25 ist eine Leitung 32 angeschlossen, die über eine erste Diode 33 zu einem Schalterelement 18 führt. Das Schalterelement 18 ist in der beschriebenen Ausführungsform vorzugsweise als P-MOS-Feldeffekttransistor ausgebildet, der über einen Gate-Anschluß mit einer Schaltersteuerung 19 verbunden ist. Die Schaltersteuerung 19 und das Schalterelement 18 stellen die Schaltereinheit 7 dar. Die Schaltersteuerung 19 ist an die Speiseleitung 8 angeschlossen, die zur Spannungssteuerung 1 geführt ist. An der Leitung 32 ist zwischen dem zweiten Übertragerelement 22 und der ersten Diode 33 eine zweite Diode 34 angeschlossen, die zudem an einem Masseanschluss angeschlossen ist. Das Schalterelement 18 steht zudem mit einem Masseanschluß in Verbindung.

Die zweite Übertragereinheit 29 weist ein drittes und viertes Übertragerelement 30, 31 auf. Das dritte Übertragerelement 30 ist in Form einer vierten Ringkernspulenwicklung 26 ausgebildet. Die vierte Ringkernspulenwicklung 26 ist mit einem Ende an eine dritte Schnittstellenleitung 40 und mit dem anderen Ende an eine vierte Schnittstellenleitung 41 angeschlossen. Die dritte und vierte Schnittstellenleitung 40, 41 sind mit der Schnittstelle 3 verbunden. Die erste, zweite, dritte und vierte Schnittstellenleitungen 38, 39, 40, 41 stellen die Schnittstellenleitungen 17 dar.

Das vierte Übertragerelement 31 weist eine fünfte und sechste Ringkernspulenwicklung 27, 28 auf, die über eine Verbindungsleitung miteinander in Serie geschaltet sind. Die fünfte Ringkernspulenwicklung 27 steht zudem mit einer vierten Endstellenleitung 45 in Verbindung. Die sechste Ringkernspulenwicklung 28 steht zudem mit einer dritten Endstellenleitung 44 in Verbindung. Die dritte und vierte Endstellenleitung 44, 45 sind zu den Endgeräten 15 geführt, wobei die Endgeräte 15 an den Endstellenleitungen 42, 43, 44, 45 angeschlossen sind.

Die Verbindungsleitung zwischen der fünften und sechsten Ringkernspulenwicklung 27, 28 ist an die Speiseleitung 8 angeschlossen, die zur Spannungssteuerung 1 und zur Schaltersteuerung 19 geführt ist. Vor dem Anschluss an die Spannungssteuerung 1 ist eine dritte Diode 35 in der Speiseleitung 8 angeordnet. Zudem steht die Speiseleitung 8 über eine vierte und fünfte Diode 36, 37 mit Masse in Verbindung.

Die erste und dritte Diode 33, 35 stellen jeweils eine Kopplungsdiode dar, die eine Umkehr des Stromflusses verhindern. Die erste Diode 33 läßt nur einen Stromfluß von dem Schalterelement 18 in Richtung auf das zweite Übertragungselement 22 zu. Die dritte Diode 35 läßt nur einen Stromfluß in Richtung auf die Spannungssteuerung 1 zu. In Gegenrichtung sperren die erste und die dritte Diode 33, 35.

Die zweite Diode 34 und die fünfte Diode 37 sind in Form einer Z-Diode ausgebildet und schützen die Schaltereinheit 7 und die Spannungssteuerung 1 vor einer Überspannung, wobei die zweite und fünfte Diode 34, 37 ab einem vorgegebenen Spannungswert eine Verbindung zum Masseanschluß ermöglichen. Dadurch werden Überspannungen zum Masseanschluß geleitet. Die zweite und fünfte Diode 34, 37 schützen somit beispielsweise gegen einen Blitzschlag.

Die vierte Diode 36 ist in Form einer normalen Diode ausgebildet und schaltet bei einer Spannung von +0,8 V eine Verbindung zwischen Speiseleitung 8 und Masse durch, so daß die Spannungssteuerung 1 gegen eine zu große positive Polung geschützt ist.

Die vorteilhafte Funktion der in Fig. 2 dargestellten Anordnung besteht darin, daß bei einer Ansteuerung der Spannungssteuerung 1 über die Steuerleitung 10 die Spannungssteuerung 1 das über die Spannungsleitung 9 zugeführte Spannungssignal von beispielsweise -48 V über die dritte Diode 35 zwischen der fünften und sechsten Ringkernspulenwicklung 27, 28 einspeist und somit die dritte und vierte Endstellenleitung 44, 45 mit einer negativen Spannung versorgt. Gleichzeitig wird durch die negative Spannung, die auf der Speiseleitung 8 herrscht, die Schaltersteuerung 19 aktiviert, so daß das Schaltelement 18 geschlossen wird und die Verbindungsleitung zwischen der zweiten und dritten Ringkernspulenwicklung 24, 25 über die erste Diode 33 auf Massepotential geschaltet wird. Damit liegen die erste und zweite Endstellenleitung 42, 43 nahezu auf Massepotential, so daß ein Endgerät 15 über eine entsprechende Verbindung mit der ersten, zweiten und dritten, vierten Endstellenleitung 42, 43, 44, 45 mit Strom versorgt wird.

Sollen an die Endstellenleitungen 42, 43, 44, 45 Endgeräte 15 in Form eines Amtsanschlusses angeschlossen werden, so wird über eine entsprechende Ansteuerung über die Steuerleitung 10 die Spannungssteuerung 1 abgeschaltet, so daß zum einen das Schalterelement 18 geöffnet wird und zum anderen die Verbindungsleitung zwischen der fünften und sechsten Ringkernspulenwicklung 27, 28 nicht mehr mit einer negativen Spannung versorgt wird. Damit liegt keine negative Gleichspannung mehr auf der dritten und vierten Endstellenleitung 44, 45 und die erste und zweite Endstellenleitung 42, 43 sind nicht mehr mit Masse verbunden, da das Schalterelement 18 geöffnet ist. Somit ist eine Stromversorgung eines Endgerätes über die Endstellenleitungen 42 bis 45 nicht mehr möglich.

Das Schalterelement 18 ist in dem beschriebenen Ausführungsbeispiel als P-MOS-Feldeffekttransistor ausgebildet, wobei jedoch das Schalterelement 18 auch in anderen Ausführungsformen ausgebildet sein kann.

Das Übertragermodul wurde in dem beschriebenen Ausführungsbeispiel durch Ringkernspulenwicklungen 23 bis 28 realisiert, wobei jedoch die Erfindung unabhängig von der Verwendung von Ringkernspulenwicklungen ist und bei jeder Art von kontaktlosem Übertragermodul eingesetzt werden kann. Zudem kann auch das Schalterelement 18 mit dem vierten Übertragerelement 31 und die Speiseleitung 8 mit dem zweiten Übertragerelement 22 verbunden sein. Wesentlich ist nur, daß für die Spannungsversorgung von Endgeräten eine Spannungsdifferenz zwischen der ersten, zweiten und dritten, vierten Endstellenleitung 42, 43, 44, 45 vorliegt. Die Art der Polung hängt von vorliegenden Rahmenbedingungen ab.

## Patentansprüche

1. Schnittstelle (3) für eine Telefonverbindung mit einem Übertragermodul (5), das eine Umsetzung von Signalen von einer ersten Leitungsseite auf eine zweite Leitungsseite durchführt,
wobei die erste Leitungsseite mit der Schnittstelle (3) und die zweite Leitungsseite mit einem Endgerät (15) verbunden ist,
**dadurch gekennzeichnet,**
**daß** eine Spannungsversorgung (9, 1) vorgesehen ist,
**daß** die Spannungsversorgung (9, 1) an das Übertragermodul (5) angeschlossen ist,
**daß** eine Steuerung (1, 18, 19) vorgesehen ist, mit der eine Einspeisung einer Versorgungsspannung in die zweite Leitungsseite aktivierbar ist, die von der Spannungsversorgung (9, 1) bereitgestellt wird.

2. Schnittstelle nach Anspruch 1, **dadurch gekennzeichnet, daß** das Übertragermodul (5) eine erste und eine zweite Übertragereinheit (20, 29) aufweist,
daß die erste Übertragereinheit (20) ein erstes und ein zweites Übertragerelement (21, 22) aufweist,
daß das erste Übertragerelement (21) mit zwei Leitungen (38, 39) der ersten Leitungsseite verbunden ist,
daß das zweite Übertragerelement (22) mit zwei Leitungen (42, 43) der zweiten Leitungsseite verbunden ist,
daß die zweite Übertragereinheit (29) ein drittes und ein viertes Übertragerelement (30, 31) aufweist,
daß das dritte Übertragerelement (30) mit zwei Leitungen (40, 41) der ersten Leitungsseite verbunden ist,
daß das vierte Übertragerelement (31) mit zwei Leitungen (44, 45) der zweiten Leitungsseite verbunden ist,
daß die Spannungsversorgung (9) mit dem vierten Übertragerelement (31) verbunden ist,
daß das zweite Übertragerelement (22) mit einem Schalter (18, 1) verbunden ist, über den das zweite Übertragungselement (22) mit einem Masseanschluss verbindbar ist.

3. Schnittstelle nach einem der Ansprüche 1 oder 2, **dadurch gekennzeichnet, daß** das Übertragermodul (5) über einen Schalter (18) mit der Spannungsversorgung (1) verbunden ist, und daß vor dem Schalter (18) und vor der Spannungsversorgung (1) jeweils eine Schutzdiode (33, 35) angeordnet ist, die den Schalter (18) und die Spannungsversorgung (1) vor einer falschen Polung schützt.

4. Schnittstelle nach einem der Ansprüche 1 bis 3, **dadurch gekennzeichnet, daß** das Übertragermodul (5) über einen Schalter (18) mit der Spannungsversorgung (1) verbunden ist, und daß an der Leitung zwischen dem Schalter (18) und einem ersten Übertragerelement (21) eine zweite Diode (34) angeordnet ist, die ab einem vorgegebenen Spannungswert eine Verbindung zu einem Masseanschluss herstellt.

5. Schnittstelle nach einem der Ansprüche 1 bis 4, **dadurch gekennzeichnet, daß** das Übertragermodul (5) über einen Schalter (18) mit der Spannungsversorgung (1) verbunden ist, und daß an der Leitung zwischen der Spannungsversorgung (1) und einem vierten Übertragungselement (31) eine fünfte Diode (37) angeordnet ist, die ab einem vorgegebenen Spannungswert eine Verbindung zu einem Masseanschluss herstellt.

6. Schnittstelle nach einem der Ansprüche 1 bis 5, **dadurch gekennzeichnet, daß** das Übertragermodul (5) über einen Schalter (18) mit der Spannungsversorgung (1) verbunden ist, und daß an der Leitung zwischen der Spannungsversorgung (1) und einem vierten Übertragungselement (31) eine vierte Diode (36) angeordnet ist, die ab einem vorgegebenen positiven Spannungswert eine Verbindung zu einem Masseanschluss herstellt.

7. Schnittstelle nach einem der Ansprüche 1 bis 6, **dadurch gekennzeichnet, daß** die zweite Leitungsseite als S₀-Bus mit vier Endstellenleitungen (42, 43, 44, 45) ausgebildet ist.

8. Schnittstelle nach einem der Ansprüche 1 bis 7, **dadurch gekennzeichnet, daß** die Schnittstelle (3) Mittel aufweist, mit denen aus einem ankommenden Signal der Takt des Signals ermittelbar ist, und daß die Schnittstelle (3) den erfassten Takt ausgibt.

9. Schnittstelle nach Anspruch 8, **dadurch gekennzeichnet, daß** der erfasste Takt einer Schaltung (14) zugeführt ist,
daß die Schaltung (14) aus dem Takt ein eigenes Taktsignal ableitet oder das Taktsignal zur Synchronisation eines Endgerätes weiterleitet.
